Europäisches Patentamt

(19) European Patent Office    (11) Publication number: **0 035 282**

Office européen des brevets    **B1**

(12)                    EUROPEAN PATENT SPECIFICATION

(45) Date of publication of patent specification: **07.01.87**    (51) Int. Cl.⁴: **G 05 B 19/42**

(21) Application number: **81101585.8**

(22) Date of filing: **05.03.81**

(54) Apparatus for programmed control of a robot.

(30) Priority: **05.03.80 US 127483**

(43) Date of publication of application:
**09.09.81 Bulletin 81/36**

(45) Publication of the grant of the patent:
**07.01.87 Bulletin 87/02**

(84) Designated Contracting States:
**BE CH DE FR GB IT LI NL SE**

(56) References cited:
**US-A-4 025 838**
**US-A-4 140 953**

**B.L. DAWSON: "A Computerized Robot Joins the Ranks of Advanced Manufacturing Technology" in NC/CAM - The New Industrial Revolution, March 28-31, 1976 published by Numerical Control Society, Inc., pages 339-356 1201 Waukegan Road, Glenview, Illinois 60025, US**

(73) Proprietor: **Thermwood Corporation**
**Dale Indiana (US)**

(72) Inventor: **Susnjara, Kenneth J.**
**115 Joy Lane**
**Santa Claus Indiana (US)**

(74) Representative: **Dipl.-Phys.Dr. Manitz Dipl.-Ing. Finsterwald Dipl.-Ing. Grämkow Dipl.-Chem.Dr. Heyn Dipl.-Phys.Rotermund,**
**B.Sc. Morgan Robert-Koch-Strasse 1**
**D-8000 München 22 (DE)**

Courier Press, Leamington Spa, England.

## Description

This invention relates to industrial robots and has particular reference to the control of industrial robots.

There are many forms of industrial robots designed to perform many types of industrial functions. It is now conventional that such robots be controlled by computers which, based on certain forms of input data, supply command signals to the robot operating mechanisms to cause the robot to assume a series of positions to thereby permit it to perform the prescribed work function.

It is customary that the input data operated on by the aforementioned computer for deriving the command signals is generated by, in effect, teaching the robot the various positions it must assume. That is, the robot learns its operating sequence by, for example, following the motions of an operator's hand through the prescribed work sequence. For example, the tool carrying portion of the robot may be equipped with a handle which will permit the operator to cause the robot to move through a path to the various positions it must assume. In so doing, for example, voltages might be generated having values corresponding with the various positions, and these voltages can be converted to binary data to be supplied to the computer. This data which relates to the positions to be assumed for each axis of movement of the various robot components at various points in time is recorded in a memory which may be of any known type, such as magnetic tape, magnetic discs, semiconductor, etc. The data, so recorded, is read back by the computer, i.e., the computer reads back the position that each axis of operation of the robot should occupy at any point in time. In the computer, the data corresponding to that desired position, i.e., the operating data, is compared with data relative to the robot's present position, and a signal corresponding with the difference is generated which is fed to the drive mechanism for controlling the robot in an attempt to move the robot to the recorded or desired position. The latter is a digital technique for producing difference or command signals; as is known, analog servo techniques can be used as well. A discussion of this subject matter can be found, by way of example, in the article "A computerised robot joins the ranks of advanced manufacturing technology" by B. L. Dawson in MS/CAM — The New Industrial Revolution published by the Numerical Control Society Ltd., March 28th—31st, 1976, pages 339 to 356.

It is quite normal that in the manual supply of input position data to the robot's computer, certain position errors will occur. Thus, the recorded position data or operating data may not be as accurate as desired during subsequently performed operating sequences, and it will be desired that this position data be changed without the need for stopping production operations and entirely "reteaching" the robot.

One way of achieving this is disclosed in US—A—4 140 953, however, in the arrangement disclosed in this prior art reference the amendments to the operating data which are fed in via an operator controlled editing means are fed into addressed storage locations wherein the corresponding data is stored.

It is thus an object of the invention to provide a user-transparent means and method for permitting the editing of operating data for an industrial robot, which permits changes to be made in the recorded positions to be assumed by the robot involving all axes of motion of the robot, as well as tool operations, while the robot continues to operate, without the need for addressing a location in a storage means where those positions are recorded.

In order to satisfy this object there is provided, in accordance with the present invention and starting from the prior art arrangement of US—A—4 140 953 an industrial robot comprising mechanism movable in a plurality of axes for moving an implement over a predetermined path, means for moving said robot mechanism about said axes and means for controlling the operations of said moving means, said control means including control processing means, means for sensing the positions of the robot mechanism in each of said plurality of axes and for supplying signals of corresponding values to said control processing means, storage means in said control processing means for storing operating data for a series of movement of the robot mechanism about the respective ones of said axes in a predetermined sequence to cause said implement to move over said predetermined path, comparator means in said control processing means for comparing on an axis-by-axis basis the positions of the robot mechanism as determined from the output signals of said sensing means with desired positions as determined from said operating data, means for producing command signals to said means for moving to cause the robot mechanism to move about a respective axes in said predetermined sequence in increments corresponding with the values of output signals from said comparator means, and editing means for manually modifying said operating data for each said axial movement, when that movement is to be carried out during an operating mode of the robot mechanism, said editing means including switch means for selecting at least one axis for which operating data is to be modified and the sign and magnitude of the modification and means for coupling signals having values corresponding to the positions of said switch means to said control processing means, characterised in that said operating data is modified in said predetermined operating sequence and for each axial movement in accordance with the values of said electrical signals received from said means by directly coupling said electrical signals to said operating data without addressing said operating data in said storage means and without interrupt of the main control loop.

Preferred embodiments of the invention are set forth in claims 2 to 4.

The principles of the invention will be more readily understood by reference to the description of a preferred embodiment thereof given hereinbelow in conjunction with the drawings which are briefly described in the following:

Fig. 1 is a perspective view of an exemplary robot structure to which the invention can be applied;

Fig. 2 is a schematic diagram of the hydraulic control system for the Fig. 1 robot;

Fig. 3 is a block-schematic diagram of a preferred embodiment of a programmed control system which selectively operates the Fig. 2 hydraulic control system to cause prescribed movement of the Fig. 1 robot; and

Fig. 4 is a perspective view of a preferred embodiment of apparatus according to the invention for modifying data upon which said programmed control system operates.

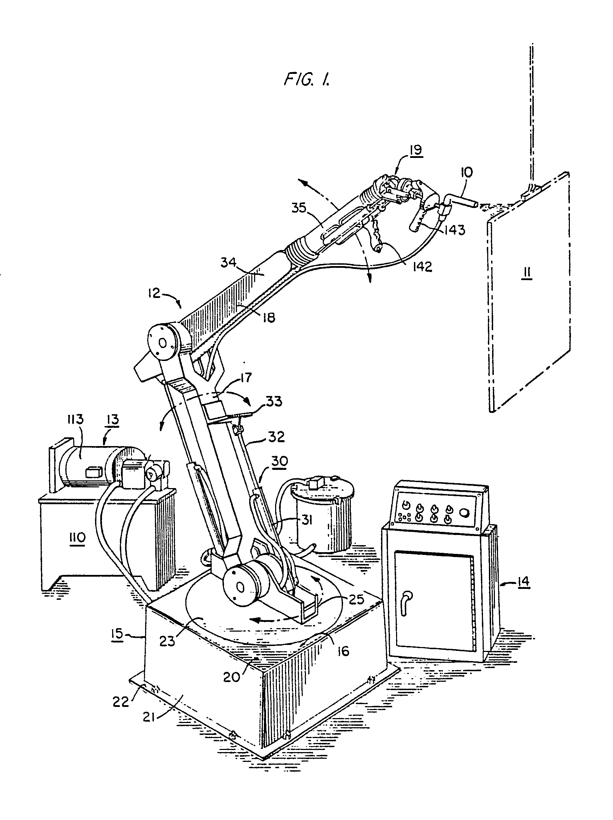

Fig. 1 illustrates a typical form of an industrial robot system to which the invention described herein might be applied. This industrial robot for performing a mechanical work function on a workpiece comprises a tool 10 which is adapted to perform the work function on a workpiece 11; the tool is mounted on a robot 12. System 14 is a control system for controlling the motions of robot 12.

The robot illustrated herein includes a support unit 15 having a base unit 16 mounted thereon for rotation about a vertical axis. A lower arm member 17 is pivotally attached at its lower end to the base unit for pivotal movement about a horizontal axis. An upper arm member 18 is pivotally connected to the upper end of lower arm member 17 for pivotal movement about a horizontal axis and a wrist structure generally indicated at 19 is mounted on the free end of the upper arm member. The wrist structure is described in greater detail in a commonly assigned U.S. patent 4 353 677 by Kenneth A. Susnjyra and Mark A. Fleck entitled "A Wrist Construction for an Industrial Robot".

The aforementioned support unit 15 includes an upper platform wall 20 and a number of sidewalls 21 provided with a lower peripheral flange 22 for bolting or otherwise firmly securing the robot to the floor or ground on which it is situated. Base unit 16 includes a circular support plate 23 mounted on platform wall 20 of the support unit for pivotal movement about a vertical axis. A mounting bracket 25 is mounted on and rotatable with support plate 23. The base unit is pivoted about its vertical axis of rotation by means of a hydraulic cylinder assembly in the conventional manner.

The upper and lower ends of lower arm member 17 are bifurcated. The lower bifurcated end of the lower arm member straddles mounting bracket 25 and is pivotally connected thereto for pivotal movement about a horizontal axis of rotation. Such pivotal motion is effected by a hydraulic cylinder assembly 30 having a cylinder portion 31 pivotally connected at its lower end to mounting bracket 25 and a rod portion 32 pivotally connected at its upper end to a bracket 33 rigidly secured to the upper front end of the lower arm member.

Upper arm member 18 includes a base section 34 and an extension section 35. These two sections are pivotally connected together so that the extension arm section can be displaced manually relative to the base arm section to correspondingly angularly displace the sphere of operation of the working tool. The structure and connected relationships of these two sections of the upper arm are described in greater detail in the aforementioned Susnjyra and Fleck U.S. Patent 4 353 677.

A power unit 13 hydraulically drives the robot to assume its various positions through the described piston and cylinder assemblies. This power unit may be a conventional commercially available type which might have an oil reservoir 110 and a set of pumps of the variable pressure-compensated type driven by a motor 113. This pump supplies fluid under pressure through a pressure line 114 to a series of two-stage electro-hydraulic servovalves 115 through 120 while the other tandem pump supplies fluid under pressure through a pilot line 121 to the spool ends of these same valves. Fluid is returned from the control valves to the reservoir through a return line 122.

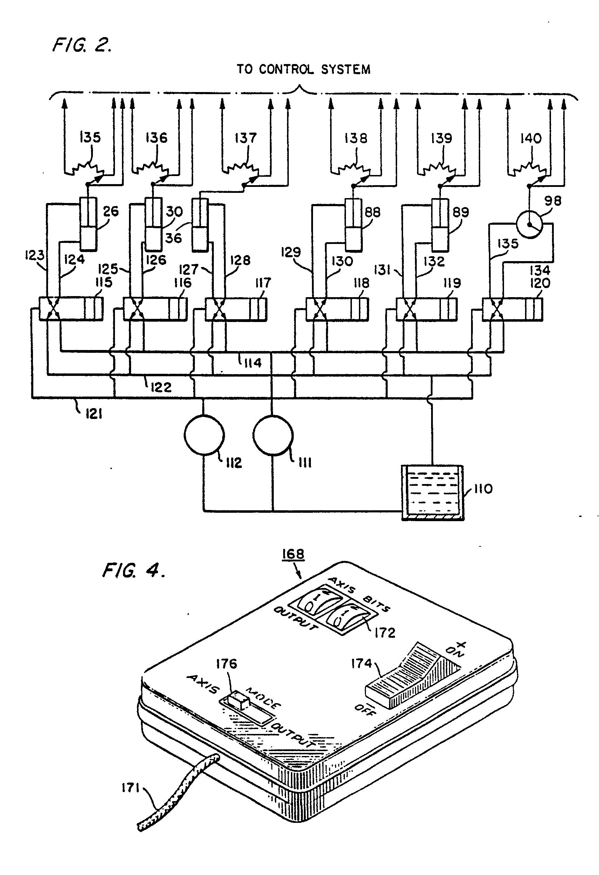

Fig. 2 is a schematic diagram illustrating the electromechanical control means for operating the hydraulic drive mechanisms operating the robot. The various elements of these control systems are under the operating control of a computer which will be described in greater detail below.

A valve 115 functions to control the operation of swing cylinder assembly 26 and is connected thereto through a pair of fluid lines 123 and 124. Valve 116 functions to control the operation of lower arm cylinder assembly 30 and is connected thereto through fluid lines 125 and 126. Valve 117 functions to control the operation of upper arm cylinder assembly 36 and is connected thereto by fluid lines 127 and 128. Valves 118 and 119 function to control the operation of wrist actuating cylinder assemblies 88 and 89 for wrist 19 and are connected thereto by sets of fluid lines 129, 130, 131 and 132. Finally, valve 120 functions to control the operation of a rotary actuator 98 and is connected thereto by fluid lines 133 and 134.

A control computer, which in this case assumes the form of a microprocessor structure, functions in the conventional manner with instructions in accordance with known programming techniques to develop command signals to actuate the aforementioned valve assemblies and the like to cause the various drive assemblies operating the robot to function. Basically, the computer compares the values of signals corresponding with the actual positions of the working tool with the desired positions as contained in the computer's memory; this input data regarding the various desired positions being stored in the memory by means of a teaching technique discussed hereinabove. As a result of this comparison, the computer is able to determine the differences in positions between the current work tool position and the next desired position and, correspondingly, it generates command signals to selected valves of the various control valves discussed above for causing the work tool to move to that next desired position.

The various positions of the arm components of the robot are sensed by rotary potentiometers 135 through 140 which are mounted on the robot so as to be able to assume positions corresponding with the positions on the various axes of the robot. Potentiometer 135 is mounted on base unit 15 for sensing the position of base unit 16 about a first vertical axis. Potentiometer 136 is mounted on mounting bracket 25 for sensing the position of the lower arm member about a second horizontal axis about which the lower arm member pivots. Potentiometer 137 is mounted on the upper end of the lower arm member for the purpose of sensing the position of the upper arm member relative to the lower arm member about a third horizontal axis about which the upper arm member pivots relative to the lower arm member.

Potentiometer 138 is mounted on a gear (not shown) which is a part of the wrist assembly for sensing the position of the tool supporting unit about a fourth horizontal axis. Potentiometer 139 is mounted on a lower section of carrier unit 43 so that it can sense the position of the tool supporting unit about a fifth axis which is perpendicular to the aforementioned fourth axis. Finally, potentiometer 140 is mounted on rotary actuator 98 for sensing the angular position of the working tool about a sixth axis which is perpendicular to the aforementioned fourth and fifth axes. The various position signals generated by the various potentiometers are converted in an analog digital converter of conventional construction to binary data signals suitable to be applied to an input terminal of the control computer for storage in the data memory thereof.

As discussed hereinabove, input position data for operating data corresponding with the various positions to be assumed by the robot from which the computer derives command signals to operate the robot over the aforementioned path is generated by moving the robot through a sequence of motions as desired or, for that matter, the data can be generated artificially and applied through suitable input means. In generating the operating data needed by the computer to produce appropriate command signals by physically moving the robot through the desired sequence of motions, in this embodiment, the outer end of the upper arm member and the tool supporting unit of the wrist structure are moved through a sequence of motions through the use of the shown lead through handles 142 and 143. Under such conditions, the various potentiometers in the robot described above generate a sequence of position signals which, in turn, form the operating data for application to the computer.

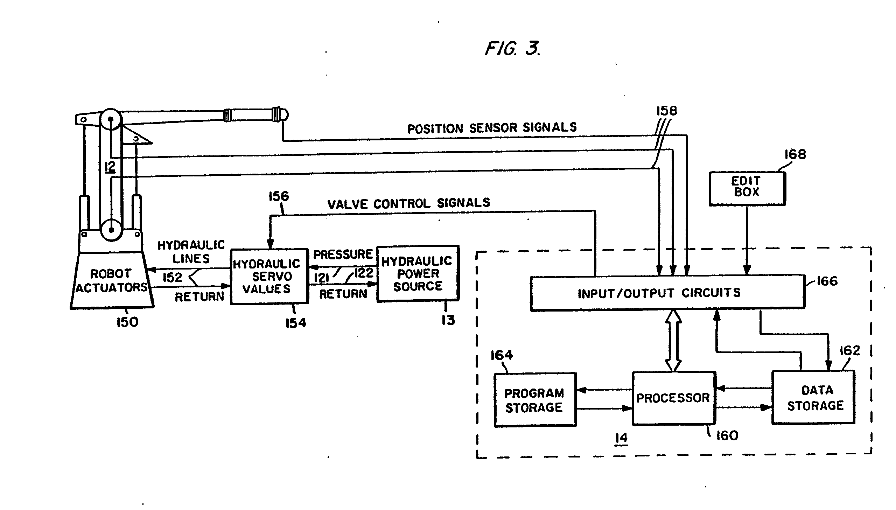

Fig. 3 is a block-schematic diagram illustrating the connected and functional relationships between the various portions of the motive power and hydraulic control and programmed control systems for the described industrial robot.

As illustrated, robot 12 is caused to move about various of its axes through the operation of hydraulic valves 26, 30, 36, 88, as well as actuator 98, as described hereinabove in connection with Fig. 2. These actuating hydraulic valves form the robot actuators 150, as schematically illustrated in this figure. The robot actuators 150 are in fluid communication via the sets of hydraulic lines 152, which are formed from the hydraulic lines 123 through 134 in the Fig. 2 illustration. The hydraulic servovalves 154 are constituted by valves 115 through 120 in Fig. 2, and these latter valves operate to control the functions of the various actuating hydraulic valves 150.

Power unit 13, as described in connection with Fig. 1, forms a hydraulic power source for the various piston and cylinder assemblies. Fluid is supplied to the various valves through the lines 121 and 122.

As pointed out hereinabove, the various servovalves 115 through 120 are selectively operated by control or command signals issuing from control system 14. These signals are shown schematically in this figure as being supplied over line 156. As discussed hereinabove, the potentiometers 135 through 140 supply voltage signals which are indicative of the current positions of the various axes of motion of the robot components. These potentiometers or position sensors supply their signals to control system 14 via lines 158 in this embodiment. In addition, these position sensors additionally provide operating data for storage in control system 14, and this data corresponds with the various positions the robot is "taught" to take when it is operated in the teaching mode.

As stated, control system 14 operates on the basis of the input or operating data it receives and in accordance with a previously inserted program of a conventional nature to produce control or command signals for operating various ones of the valves 150 to cause the robot to move about its various operating axes in a predetermined sequence. Control system 14 is constructed as a conventional microprocessor structure and includes a processor 160 which may be formed from a Zilog Model Z80. Data storage 162 which can be formed from any practical storage medium for use with the aforementioned microprocessor receives and stores in accordance with the predetermined sequence of operation data regarding the various motions to be performed by the respective axes of motion of the robot mechanism.

In accordance with a program stored in program storage 164, the processor operates to conventionally carry out a series of calculations necessary to utilize the operating data from storage 162 for issuing the necessary series of control signals which will cause the robot 12 to move about its various axes so that it can perform its prescribed functions. Basically, the calculations to be carried out by processor 160, which is programmed according to conventional techniques, comprise comparing the values of operating data retrieved from storage 162 corresponding with the next axial movement of a component of the robot mechanism with data obtained from position sensor lines 158 indicating the last position assumed by that particular axis. On the basis of the calculated difference between these two data signals, a command signal is generated which causes in the described manner the particular axis to move in a given direction by the prescribed magnitude. That is, the operating servovalve for the axis concerned is actuated to thereby operate the respective hydraulic valve to cause the needed motion about the axis in question. These functions are carried out in a sequence which will cause the robot mechanism to move through a prescribed path, as needed to carry out the desired work function.

As is conventional, the processor 160 and its program and data storages 164 and 162 are in communication with the various inputs and outputs of the control signal via input/output circuits 166. Thus, the various operating data supplied via position sensor signal lines 158 is communicated through the input/output circuit to the data storage to therein be converted to the required form placed in the proper locations in accordance with the prescribed operating sequence. These circuits supply the output control signals to the hydraulic actuating system. Further, as needed, the operating program for processor 160 can be altered by appropriate accessing program storage 164 in the conventional manner and modifying the program stored therein. These input/output circuits include dual RS232C access ports which allow easy interface with various high level machines; the described embodiment can then be made part of a larger automated system operated by a central processing computer.

In addition to the above components, a component identified herein as an edit box 168 has access to processor 160 via the input/output circuits 166. The structure and functions of the edit box are described hereinbelow in connection with Fig. 4. In Fig. 4 is illustrated in perspective view the edit box 168 mentioned hereinabove. It is contemplated that this edit box be a hand-held device which in the following manner permits an operator to adjust or modify the operating data so as to permit errors occurring in the aforementioned teaching process to be corrected or to permit the operating data to be corrected to meet slight changes required in the work pattern. The changes can be made while the system continues to operate.

A schematic diagram of the interior circuitry of edit box 168 is not provided in view of its simplicity. Switches 170 and 172 are merely BCD switches which are well known in the art. Operation of these devices produce pulse trains of lengths corresponding with switch position. Switch 174 is a three-position rocket switch which in its center position is off. When the right portion, as viewed in the drawing of switch 174 is pressed, a positive change in magnitude is indicated and, when the left portion of the switch is pressed, a negative change in magnitude is indicated. In the alternative, if the system is being operated on an analog basis, switches 170, 172 and 174 can be replaced with potentiometers. Operation of slide switch 176 causes the output of edit box 168 to modify the aforementioned operating data with regard to the amount of movement about the respective axes of the various robot components; operation of the switch to the right hand or output position causes modification of operating data with respect to tool manipulation. In the latter case, data which, for example, actuates and turns off a paint sprayer carried by the robot may be modified to change the point at which the paint sprayer is either turned on or turned off.

Operation of switch 170 provides a data output which indicates which axis of motion of the robot is to have its operating data modified, and operation of switch 172 indicates the number of bits or the magnitude by which that axis is to have its motion distance modified. Operation of switch 174 provides an indication of whether the modification set up by switches 170 and 172 is to be in a positive or negative direction. It should be noted that, while the described embodiment of edit box 168 is constructed to edit one axis at a time, a plurality of switches 170 and 172 can be used to permit editing on a plurality of axes at a given time.

In considering the operation of the system, as described hereinabove, the addition of the edit box will produce the following results. As each operating data word for a given axis of motion of the robot is called from the data storage 162 to processor 160, the processor under the control of the program from storage 164 is caused to look to the inputs it receives from edit box 168 and determine whether, at that point in time, there is input data from the edit box indicating the axis in question is to receive modifying data. If no such data is present for that axis of motion, the operation of the control system proceeds as described hereinabove. However, if, when it is preparing to cause motion about a given axis, the processor receives modifying data from edit box 168 regarding that axis, the processor will operate in the usual manner to modify the operating data for that axis by the amount and direction indicated by the input data from the edit box. Thus, the motion of the component in question about the axis in question is altered by the amount and direction indicated by the modifying data coming from the edit box.

The foregoing arrangement permits an operator to observe the operations of robot 12 and, as is very often the case, the human eye is best able to determine when a given operating sequence is not producing the desired results. At the appropriate time, as the implement is proceeding over the present path, the operator can cause a slight change in the path to correct an error in the robot's motion. This error might have occurred during the lead-through teaching operation, or it might have to be made because of variations in the dimensions of the workpieces being processed. It is clear that the operating data for the robot can be edited without taking the machine out of service, and the edit box can be operated without making major changes in the various motions. Thus, it is the usual case that the motions being altered will be changed a little at a time over a number of cycles until the exact desired path of operation is being achieved. The editing technique in accordance with this invention, by individually considering each axis of motion, avoids confusion and allows operating data to be edited in an orderly manner.

## Claims

1. An industrial robot comprising mechanism (16, 17, 18, 19) movable in a plurality of axes for moving an implement (10) over a predetermined path, means (26, 30, 36, 88, 89, 98, 115, 116, 117, 118, 119, 120) for moving said robot mechanism (16, 17, 18, 19) about said axes and means for controlling the operations of said moving means, said control means including:

control processing means (14),

means (135, 136, 137, 138, 139, 140) for sensing the positions of the robot mechanism (16, 17, 18, 19) in each of said plurality of axes and for supplying signals of corresponding values to said control processing means (14),

storage means (162) in said control processing means for storing operating data for a series of movements of the robot mechanism about the respective ones of said axes in a predetermined sequence to cause said implement to move over said predetermined path,

comparator means (160) is said control processing means (14) for comparing on an axis-by-axis basis the positions of the robot mechanism as determined from the output signals of said sensing means (135, 136, 137, 138, 139, 140) with desired positions as determined from said operating data,

means (164) for producing command signals to said means for moving (26, 30, 36, 88, 89, 98, 115, 116, 117, 118, 119, 120) to cause the robot mechanism to move about the respective axes in said predetermined sequence in increments corresponding with the values of output signals from said comparator means (160), and

editing means (168) for manually modifying said operating data for each said axial movement, when that movement is to be carried out during an operating mode of the robot mechanism, said editing means including switch means (170, 172, 174) for selecting at least one axis for which operating data is to be modified and the sign and magnitude of the modification, and means (171, 176) for coupling signals having values corresponding to the positions of said switch means to said control processing means (14), characterised in that said operating data is modified in said predetermined operating sequence and for each axial movement in accordance with the values of said electrical signals received from said means (171, 176) by directly coupling said electrical signals to said operating data without addressing said operating data in said storage means and without interrupt of the main control loop.

2. An industrial robot in accordance with claim 1, characterised in that said editing means is housed in a hand-held container and can be remotely placed from said control means while being electrically coupled thereto.

3. An industrial robot in accordance with either of claims 1 or 2, characterised in that said editing means further comprises means (176) for selectively supplying modifying data to said control processing means (14) for modifying operating data controlling the operation of said implement (10).

4. An industrial robot in accordance with any one of the preceding claims, characterised in that said control processing means comprises a microprocessor (160); and in that said microprocessor (160) is caused to look at the inputs it receives from said editing means (168), with each operational step, as each operating data word for a given axis of movement of the robot is called from said storage means (162) to said microprocessor (160) to determine whether, at that point in time, there is input data from said editing means (168) and, if this is the case, to modify the operating data for that axis by the magnitude and sign indicated by the modifying data coming from said editing means (168) as the operating data is retrieved from said storage means (162).

## Patentansprüche

1. Industrieller Roboter mit einem Mechanismus (16, 17, 18, 19), der in einer Vielzahl von Achsen bewegbar ist, zur Bewegung eines Arbeitsgerätes (10) über einen vorbestimmten Weg, Mitteln (26, 30, 36, 88, 89, 98, 115, 116, 117, 118, 119, 120) zur Bewegung des Roboter-Mechanismus (16, 17, 18, 19) um die Achsen und Mitteln zum Steuern der Betätigungen der Bewegungsmittel, wobei die Steuermittel enthalten;

Steuer-Verarbeitungsmittel (14),

Mittel (135, 136, 137, 138, 139, 140) zum Erfassen der Stellungen der Roboter-Mechanismus (16, 17, 18, 19) in jeder der Vielzahl von Achsen und zum Zuführen von Signalen entsprechender Werte zu den Steuerverarbeitungsmitteln (14),

Speichermittel (160) in den Steuerverarbeitungsmitteln zum Speichern von Betriebsdaten für eine Reihe von Bewegungen des Roboter-Mechanismus um die jeweiligen der Achsen in einer vorbestimmten Abfolge, um eine Bewegung des Arbeitsgerätes über den vorbestimmten Weg zu veranlassen,

Vergleichsmittel (160) in den Steuerverarbeitungsmitteln (14) zum Vergleichen der Stellungen des Roboter-Mechanismus auf Grundlage Achseum-Achse, wie sie aus den Ausgangssignalen der Erfassungsmittel (135, 136, 137, 138, 139, 140) bestimmt sind, mit erwünschten Stellungen, wie sie von den Betriebsdaten bestimmt sind,

Mittel (164) zur Erzeugung von Befehlssignalen zu den Mitteln zum Bewegen (26, 30, 36, 88, 89, 98, 115, 116, 117, 118, 119, 120), um den Roboter-Mechanismus zur Bewegung um die jeweiligen Achsen in der vorbestimmten Abfolge zu veranlassen, mit den Werten von Ausgangssignalen von den Vergleichsmitteln (160) entsprechenden Schritten, und

Aufbereitungsmittel (160) zum manuellen Modifizieren der Betriebsdaten für jede Axialbewegung, wenn diese Bewegung während eines Betriebsmodus des Robotermechanismus auszuführen ist, wobei die Aufbereitungsmittel Schaltermittel (170, 172, 174) zum Auswählen mindestens einer Achse enthalten, für die Betriebsdaten zu modifizieren sind, und für das Vorzeichen und die Größe der Modifizierung, und Mittel (171, 176) zum Koppeln von Signalen mit den Stellungen der Schaltermittel entsprechenden Werten zu den Steuerverarbeitungsmitteln (14), dadurch gekennzeichnet, daß die Betriebsdaten in der vorbestimmten Betriebsabfolge und für jede Axialbewegung entsprechend den Werten der von den Mitteln (171, 176) empfangenen elektrischen Signale modifiziert werden durch direktes Koppeln der elektrischen Signale zu den Betätigungsdaten ohne Adressieren der Betätigungsdaten in den Speichermitteln und ohne Unterbrechung der Hauptsteuerschleife.

2. Industrieller Roboter nach Anspruch 1, dadurch gekennzeichnet, daß die Aufbereitungsmittel in einem handgehaltenen Behälter untergebracht sind und entfernt von den Steuermitteln angeordnet werden können, während sie elektrisch mit diesen gekoppelt sind.

3. Industrieller Roboter nach einem der Ansprüche 1 oder 2, dadurch gekennzeichnet, daß die Aufbereitungsmittel weiter Mittel (176) zum wahlweisen Zuführen von Modifizierungsdaten zu den Steuerverarbeitungsmitteln (14) enthalten zum Modifizieren von den Betrieb des Arbeitsgerätes (10) steuernden Betriebsdaten.

4. Industrieller Roboter nach einem der vorangehenden Ansprüche, dadurch gekennzeichnet, daß die Steuerverarbeitungsmittel einen Mikroprozessor (160) umfassen und daß der Mikroprozessor (160) veranlaßt wird, auf die Eingangssignale zu achten, die er von den Aufbereitungsmitteln (168) bei jedem Betätigungsschritt erhält, während jedes Betätigungsdatenwort für eine bestimmte Bewegungsachse des Roboters von den Speichermittel (162) zu dem Mikroprozessor (160) abgerufen wird, um zu bestimmen, ob zu diesem Zeitpunkt Eingangsdaten von den Aufbereitungsmitteln (168) vorhanden sind, und, falls das der Fall ist, die Betriebsdaten für diese Achse um die Größe und das Vorzeichen zu modifizieren, die durch die Modifizierungsdaten angezeigt sind, welche von den Aufbereitungsmitteln (168) kommen, während die Betriebsdaten von den Speichermitteln (162) abgezogen werden.

## Revendications

1. Robot industriel comprenant un mécanisme (16, 17, 18, 19) mobile suivant plusieurs axes pour déplacer un outil (10) sur une trajectoire prédéterminée, des moyens (26, 30, 36, 88, 89, 98, 115, 116, 117, 118, 119, 120) destinés à déplacer ledit mécanisme (16, 17, 18, 19) du robot autour desdits axes et des moyens destinés à commander les opérations desdits moyens de déplacement, lesdits moyens de commande comprenant:

des moyens (14) de traitement de commande,

des moyens (135, 136, 137, 138, 139, 140) destinés à détecter les positions du mécanisme (16, 17, 18, 19) du robot dans chacun desdits plusieurs axes et à fournir des signaux de valeurs correspondantes auxdits moyens (14) de traitement de commande,

des moyens (162) de mémorisation situés dans lesdits moyens de traitement de commande afin de mémoriser les données d'exploitation pour une série de mouvements du mécanisme du robot autour de certains, respectifs, desdits axes suivant une séquence prédéterminée afin d'amener ledit outil à se déplacer sur ladite trajectoire prédéterminée,

des moyens comparateurs (160) situés dans lesdits moyens (14) de traitement de commande afin de comparer, axe par axe, les positions du mécanisme du robot telles que déterminées à partir des signaux de sortie desdits moyens de détection (135, 136, 137, 138, 139, 140) avec des positions souhaitées telles que déterminées à partir desdites données d'exploitation.

des moyens (164) destinés à produire des signaux de commande pour lesdits moyens de déplacement (26, 30, 36, 88, 89, 98, 115, 116, 117, 118, 119, 120) afin d'amener le mécanisme du robot à se déplacer autour des axes respectifs suivant ladite séquence prédéterminée par incréments correspondant aux valeurs de signaux de sortie desdits moyens comparateurs (160), et

des moyens d'édition (168) destinés à modifier manuellement lesdites données d'exploitation pour chaque mouvement axial, lorsque ce mouvement doit être effectué durant un mode d'exploitation du mécanisme du robot, lesdits moyens d'édition comprenant des moyens de commutation (170, 172, 174) destinés à sélectionner au moins un axe pour lequel des données d'exploitation doivent être modifiées et le signe et l'amplitude de la modification, et des moyens (171, 176) destinés à coupler des signaux ayant des valeurs correspondant aux positions desdits moyens de commutation auxdits moyens (14) de traitement de commande,

caractérisé en ce que lesdites données d'exploitation sont modifiées suivant ladite séquence d'exploitation prédéterminée et pour chaque mouvement axial conformément aux valeurs desdits signaux électriques reçus desdits moyens (171, 176) par couplage direct desdits signaux électriques auxdites données d'exploitation sans adressage desdites données d'exploitation dans lesdits moyens de mémorisation et sans interruption de la boucle de commande principale.

2. Robot industriel selon la revendication 1, caractérisé en ce que lesdits moyens d'édition sont logés dans un conteneur portatif et peuvent être placés à distance desdits moyens de commande tout en leur étant couplés électriquement.

3. Robot industriel selon l'une des revendications 1 ou 2, caractérisé en ce que lesdits moyens d'édition comprennent en outre des moyens (176) destinés à fournir sélectivement des données de modification auxdits moyens (14) de traitement de commande afin de modifier les données d'exploitation commandant le fonctionnement dudit outil (10).

4. Robot industriel selon l'une quelconque des revendications précédentes, caractérisé en ce que lesdits moyens de traitement de commande comprennent un microprocesseur (160); et en ce que ledit microprocesseur (160) est amené à consulter les entrées qu'il reçoit desdits moyens d'édition (168), avec chaque étape d'exploitation, lorsque chaque mot de données d'exploitation pour un axe donné de mouvement du robot est appelé pour passer desdits moyens de mémorisation (162) vers ledit microprocesseur (160) afin de déterminer si, à cet instant, il y a des données d'entrée provenant desdits moyens d'édition (168) et, si tel est le cas, de modifier les données d'exploitation concernant cet axe de l'amplitude et du signe indiqués par les données de modification provenant desdits moyens d'édition (168) lorsque les données d'exploitation sont extraites desdits moyens de mémorisation (162).

FIG. I.

FIG. 2.

TO CONTROL SYSTEM

FIG. 4.

FIG. 3.

POSITION SENSOR SIGNALS — 158

VALVE CONTROL SIGNALS — 156

EDIT BOX — 168

ROBOT ACTUATORS — 150

HYDRAULIC SERVO VALUES — 154

HYDRAULIC POWER SOURCE — 13

INPUT/OUTPUT CIRCUITS — 166

PROGRAM STORAGE — 164

PROCESSOR — 160

DATA STORAGE — 162

HYDRAULIC LINES

PRESSURE

RETURN

152

121 / 122

RETURN

0 035 282